# EUROPÄISCHE PATENTSCHRIFT

(11) **EP 3 094 533 B1**
(45) Veröffentlichungstag und Bekanntmachung des Hinweises auf die Patenterteilung: **25.10.2017**
(21) Anmeldenummer: 14824806.5
(22) Anmeldetag: 17.12.2014
(51) Int. Cl.: B60W 50/10, B62D 1/22, B62D 15/02, B60W 10/04, B60W 10/184, B60W 10/20, B60W 50/00

(54) **BETREIBEN EINES FAHRZEUGS GEMÄSS DEM WUNSCH EINES FAHRZEUGINSASSEN**
OPERATION OF A VEHICLE IN ACCORDANCE WITH THE DESIRE OF A VEHICLE OCCUPANT
FONCTIONNEMENT D'UN VÉHICULE SELON LE SOUHAIT D'UN OCCUPANT DU VÉHICULE

(30) Priorität: 17.01.2014 DE 102014200782
(43) Veröffentlichungstag der Anmeldung: 23.11.2016
(73) Patentinhaber: Bayerische Motoren Werke Aktiengesellschaft, 80809 München (DE)
(72) Erfinder: HUANG, Pei-Shih Dennis, 85293 Reichertshausen (DE)
(86) Internationale Anmeldenummer: PCT/EP2014/078187
(87) Internationale Veröffentlichungsnummer: WO 2015/106912

(56) Entgegenhaltungen:
- EP-A1- 2 591 976
- WO-A1-2010/007505
- DE-A1-102011 121 484
- DE-A1-102012 012 697
- US-A1- 2004 117 098

## Beschreibung

Die Erfindung betrifft ein Fahrzeug und ein Verfahren zu dessen Betreiben gemäß dem Wunsch eines Fahrzeuginsassen. Des Weiteren betrifft die Erfindung eine Vorrichtung zum Betreiben eines Fahrzeugs. Des Weiteren betrifft die Erfindung ein Fahrzeugsteuerungssystem zum Betreiben eines Fahrzeugs. Des Weiteren betrifft die Erfindung ein Computerprogramm zum Betreiben eines Fahrzeugs und ein Computerprogrammprodukt.

Heutige Fahrzeuge verfügen über immer mehr Bedienmöglichkeiten. Eine Herausforderung ist in diesem Zusammenhang die Zuverlässigkeit.

US 5,157,384 beschreibt ein System mit einem Bildschirm und einer Vielzahl an Eingabegeräten, darunter eine Tastatur, eine Maus, einen Berührungssensor, ein Sprachsensor und ein Bildsensor. Außerdem beinhaltet das System ein Schnittstellenmodul für Profile, darunter Anwendungsprofile und Nutzerprofile. Diese sind Dateien, die Eingabenachrichten auflisten, die von einem alternativen Eingabe Subsystem aus Eingabesigrialen der Eingabegeräte erzeugt werden. Den Eingabenachrichten sind Befehle der Eingabegeräte zugeordnet, die von Anwendungen genutzt werden können. Ein Nutzer wählt das Eingabegerät um Daten einzugeben. Infolge elektrischer Signale des Eingabegeräts wird ein Eingabesignal an das alternative Eingabe Subsystem gesendet, welches eine Eingabenachricht weiterleitet. Das Anwendungsprofil und das Nutzerprofil werden jeweils auf einen mit der Eingabenachricht korrespondierenden Befehl geprüft. Der höher priorisierte Befehl wird an eine Anwendung weitergeleitet in Antwort darauf wird und eine entsprechende Aktion durchgeführt.

Aus WO 2010/007505 A1 ist es bekannt, in einem Fahrzeug zur vorausschauenden Ansteuerung eines Aktors sowohl Bewegungen des Fahrers z.B. mittels einer Kamera zu erfassen und zu verwenden als auch Informationen über einen statischen Zustand des Fahrers z.B. mittels eines Drucksensors zu erfassen und zu verwenden. Auf Basis der erfassten Informationen werden dann Werte abgeleitet, mittels derer bereits Steuerungs-Schritte eingeleitet werden, beispielsweise für die Lenkung oder die Bremsen, bevor der Fahrer diese tatsächlich betätigt.

Die Aufgabe, die der Erfindung zugrunde liegt, ist es, ein Verfahren und eine korrespondierende Vorrichtung zu schaffen, die einen Beitrag leisten, einen komfortablen und sicheren Kraftfahrzeugbetrieb zu ermöglichen.

Die Aufgabe wird gelöst durch die Merkmale der unabhängigen Patentansprüche. Vorteilhafte Ausgestaltungen sind in den Unteransprüchen gekennzeichnet.

Gemäß einem ersten Aspekt zeichnet sich die Erfindung aus durch ein Verfahren zum Betreiben eines Fahrzeugs. Des Weiteren zeichnet sich die Erfindung gemäß einem zweiten Aspekt aus durch eine korrespondierende Vorrichtung zum Betreiben des Fahrzeugs.

Das Fahrzeug weist mindestens eine Hauptsensoreinheit auf. Ein Messsignal der Hauptsensoreinheit ist charakteristisch für einen Hauptfahrerwunsch eines Fahrzeuginsassen bezüglich einer Beeinflussung eines Fahrverhaltens des Fahrzeugs. Der Hauptfahrerwunsch des Fahrzeuginsassen ist repräsentiert durch eine Bewegung einer Hand oder eines Fußes des Fahrzeuginsassen.

Das Fahrzeug weist ferner mindestens eine Nebensensoreinheit auf. Ein Messsignal der Nebensensoreinheit ist charakteristisch für einen Nebenfahrerwunsch des Fahrzeuginsassen bezüglich der Beeinflussung des Fahrverhaltens des Fahrzeugs. Der Nebenfahrerwunsch ist repräsentiert anderweitig als durch die Bewegung der Hand oder des Fußes des Fahrzeuginsassen.

Das Fahrzeug weist darüber hinaus mindestens einen Aktor auf. In Abhängigkeit eines Stellsignals beeinflusst der Aktor das Fahrverhalten des Fahrzeugs.

Abhängig von dem durch das Messsignal des Hauptsensors repräsentierten Hauptfahrerwunsch und abhängig von dem durch das Messsignal des Nebensensors repräsentierten Nebenfahrerwunsch wird ein resultierender Fahrerwunsch bezüglich der Beeinflussung des Fahrverhaltens des Fahrzeugs ermittelt. Im Falle eines Neutralwerts des Hauptfahrerwunschs wird dem resultierenden Fahrerwunsch der Nebenfahrerwunsch zugeordnet. Anderenfalls wird dem resultierenden Fahrerwunsch der Hauptfahrerwunsch zugeordnet. Abhängig von dem resultierenden Fahrerwunsch wird das Stellsignal erzeugt.

Die Erfindung nutzt die Erkenntnis, dass der Hauptfahrerwunsch zuverlässiger detektiert werden kann als der Nebenfahrerwunsch und so gemäß dem oben erläuterten Vorgehen der resultierende Fahrerwunsch zuverlässig ermittelt werden kann. So wird ein Beitrag zu dem sicheren Fahrbetrieb geleistet. Im Hinblick auf einen durch den Fahrzeuginsassen wahrgenommenen komfortablen Fahrbetrieb wird bei Vorliegen des Neutralwertes der Nebenfahrerwunsch berücksichtigt.

Der Fahrzeuginsasse kann insbesondere ein Fahrer des Fahrzeugs sein.

Die Beeinflussung des Fahrverhaltens des Fahrzeugs kann einfache bis komplexe Fahrmanöver beinhalten. Ein einfaches Fahrmanöver kann beispielsweise ein Beschleunigungsvorgang sein. Ein komplexes Fahrmanöver kann beispielsweise einen Überholvorgang umfassen.

Der Aktor, der in Abhängigkeit des Stellsignals das Fahrverhalten des Fahrzeugs beeinflusst, kann eine Lenkung und/oder eine Bremse und/oder Teile eines Antriebsstrangs und/oder den Antriebsstrangs umfassen.

Der Hauptfahrerwunsch ist repräsentiert durch eine Bewegung der Hand oder des Fußes des Fahrzeuginsassen. Unter der Bewegung der Hand oder des Fußes des Fahrzeuginsassen fällt in diesem Zusammenhang auch eine Kraftausübung auf ein Objekt, die zu einer Kraftübertragung in das Objekt führt oder zu einer Änderung eines Drucks innerhalb des Objekts führt.

Hauptfahrerwunsch und Nebenfahrerwunsch können jeweils aus Sicht des Fahrzeuginsassen eine beliebige Wertigkeit haben. So kann beispielsweise der Nebenfahrerwunsch aus Sicht des Fahrzeuginsassen die gleiche Wertigkeit haben wie der Hauptfahrerwunsch.

Die Hauptsensoreinheit und die Nebensensoreinheit können zusammengefasst in Form einer einzigen Baueinheit angeordnet sein. Insbesondere kann optional die Hauptsensoreinheit als Nebensensoreinheit genutzt werden.

Der Neutralwert wird dem Hauptfahrerwünsch dann zugeordnet, wenn vermeintlich durch den Fahrzeuginsassen kein Hauptfahrerwunsch ausgedrückt wird.

In einer vorteilhaften Ausgestaltung gemäß dem ersten und zweiten Aspekt ist die Hauptsensoreinheit als ein Drucksensor und/oder ein Drehmomentsensor ausgebildet. Abhängig von dem durch den Fahrzeuginsassen ausgeübten Druck und/oder ein durch den Fahrzeuginsassen ausgeübtes Drehmoment kann beispielsweise auf die Intensität des Hauptfahrerwunsches geschlossen werden. Dem Hauptfahrerwunsch kann eine vorgegebene Beeinflussung des Fahrverhaltens des Fahrzeugs zugeordnet sein.

In einer weiteren vorteilhaften Ausgestaltung gemäß dem ersten und zweiten Aspekt ist die Hauptsensoreinheit als Lenkwinkelsensor und/oder Pedalstellungsgeber ausgebildet.

In einer weiteren vorteilhaften Ausgestaltung gemäß dem ersten und zweiten Aspekt ist die Hauptsensoreinheit als Berührungssensoreinheit und/oder eine Annäherungssensoreinheit ausgebildet. Die Berührungssensoreinheit beziehungsweise die Annäherungssensoreinheit kann dabei beispielsweise mehrere Elemente umfassen, die als Schicht angeordnet sind. Die Berührungssensoreinheit und/oder die Annäherungssensoreinheit kann beziehungsweise können Sensorelemente enthalten, die resistiv und/oder kapazitiv und/oder induktiv und/oder temperatursensitiv sind. Die Berührungssensoreinheit und/oder Annäherungssensoreinheit kann Teil eines sogenannten Touchscreens sein.

In einer weiteren vorteilhaften Ausgestaltung gemäß dem ersten und zweiten Aspekt ist die Hauptsensoreinheit als eine bildverarbeitende Hauptsensoreinheit ausgebildet. Die bildverarbeitende Hauptsensoreinheit kann dazu ausgebildet sein, die Geste der Hand oder des Fußes des Fahrzeuginsassen innerhalb eines vorgegebenen Bewegungsspielraums des Fahrzeuginsassen zu erfassen.
In einer weiteren vorteilhaften Ausgestaltung gemäß dem ersten und zweiten Aspekt ist die Nebensensoreinheit als bildverarbeitende Nebensensoreinheit ausgebildet. Die bildverarbeitende Nebensensoreinheit kann dazu ausgebildet sein, Bewegungen des Fahrzeuginsassen, die nicht von der Hand oder des Fußes des Fahrzeuginsassen ausgehen, zu erfassen.

Die bildverarbeitende Hauptsensoreinheit und die bildverarbeitende Nebensensoreinheit können in einer einzigen Baueinheit angeordnet sein. Insbesondere kann optional die bildverarbeitende Hauptsensoreinheit auch als bildverarbeitende Nebensensoreinheit genutzt werden.

In einer weiteren vorteilhaften Ausgestaltung gemäß dem ersten und zweiten Aspekt ist der Nebenfahrerwunsch repräsentiert durch eine Blickrichtung des Fahrzeuginsassen innerhalb eines vorgegebenen Bereichs. Beispielsweise wird ein Blick des Fahrzeuginsassen durch eine Frontscheibe des Fahrzeugs erfasst. Umfasst der vorgegebene Bereich beispielsweise einen äußeren Rand der Frontscheibe, repräsentiert die Blickrichtung an den äußeren Rand der Frontscheibe einen Nebenfahrerwunsch.

In einer weiteren vorteilhaften Ausgestaltung gemäß dem ersten und zweiten Aspekt ist die Nebensensoreinheit als eine audiosignalverarbeitende Einheit ausgebildet. Auf diese Weise kann der Nebenfahrerwunsch durch den Fahrzeuginsassen auch in Form eines durch den Fahrzeuginsassen ausgelösten Audiosignals ausgedrückt werden.

In einer weiteren vorteilhaften Ausgestaltung gemäß dem ersten und zweiten Aspekt ist der Nebenfahrerwunsch repräsentiert durch einen Sprachbefehl des Fahrzeuginsassen. Dies hat den Vorteil, dass der Fahrzeuginsasse den Nebenfahrerwunsch in einer für einen Menschen sehr eingängigen Weise äußern kann.

In einer weiteren vorteilhaften Ausgestaltung gemäß dem ersten und zweiten Aspekt ist die Nebensensoreinheit als ein Elektroenzephalograph ausgebildet. In vorteilhafter Weise kann so eine elektrische Gehirnaktivität des Fahrzeuginsassen gemessen werden.

In einer weiteren vorteilhaften Ausgestaltung gemäß dem ersten und zweiten Aspekt ist der Nebenfahrerwunsch repräsentiert durch eine elektrische Gehirnaktivität des Fahrzeuginsassen. Dies hat den Vorteil, dass der Fahrzeuginsasse seine volle Konzentration auf die aktuelle Verkehrslage und den Nebenfahrerwunsch richten kann. Die elektrische Gehirnaktivität, die bei der Konzentration auf den Nebenfahrerwunsch entsteht, wird als Nebenfahrerwunsch gedeutet.

In einer weiteren vorteilhaften Ausgestaltung gemäß dem ersten und zweiten Aspekt wird eine Zielvorgabe des Fahrzeuginsassen bereitgestellt. Ferner werden Daten bezüglich einer Umgebung des Fahrzeugs bereitgestellt. Ferner wird abhängig von der Zielvorgabe des Fahrzeuginsassen und von den Daten bezüglich der Umgebung des Fahrzeugs und des resultierenden Fahrerwunsches des Fahrzeuginsassen das Stellsignal erzeugt. In vorteilhafter Weise wird so ein Beitrag dazu geleistet, abhängig von der Zielvorgabe des Fahrzeuginsassen und abhängig von den Daten bezüglich der Umgebung des Fahrzeugs und abhängig von dem resultierenden Fahrerwunsch einen sicheren Kraftfahrzeugbetrieb zu gewährleisten.
Die Zielvorgabe des Fahrzeuginsassen kann dabei vorab bereitgestellt werden. Die Zielvorgabe des Fahrzeuginsassen kann auch im laufenden Betrieb bereitgestellt werden. Die Zielvorgabe kann vorab verwendet worden sein, um eine Routenplanung zu ermitteln. Die Routenplanung umfasst dabei den bestmöglichen Weg von einer aktuellen Fahrzeugposition zu der Zielvorgabe des Fahrzeuginsassen.

Die Daten bezüglich der Umgebung des Fahrzeugs umfassen beispielsweise eine aktuelle Position des Fahrzeugs und/oder ein potentielles Hindernis in einer unmittelbaren Umgebung oder in einem Verlauf der Routenplanung.

Besteht auf Grund des resultierenden Fahrerwunsches des Fahrzeuginsassen eine erhöhte Wahrscheinlichkeit, dass eine Kollision mit dem Hindernis in der unmittelbaren Umgebung auftritt, so wird das Stellsignal derart erzeugt, dass durch die Beeinflussung des Fahrverhaltens des Fahrzeugs die Wahrscheinlichkeit der Kollision am geringsten ist, wobei das Stellsignal nicht zwingend den resultierenden Fahrerwunsch widerspiegeln muss.

Der Kraftfahrzeugbetrieb, bei dem das Erzeugen des Stellsignals abhängig von der Zielvorgabe und abhängig von den Daten bezüglich der Umgebung des Fahrzeugs und optional ohne zusätzliche Beeinflussung durch den Fahrzeuginsassen erfolgt, kann auch als autonomer Fahrbetrieb bezeichnet werden.

Gemäß einem dritten Aspekt zeichnet sich die Erfindung aus durch ein Fahrzeugsteuerungssystem, das eine Vorrichtung gemäß dem zweiten Aspekt umfasst, die signaltechnisch gekoppelt ist mit der mindestens einen Hauptsensoreinheit und der mindestens einen Nebensensoreinheit und dem mindestens einen Aktor.

Gemäß einem vierten Aspekt zeichnet sich die Erfindung aus durch ein Computerprogramm zum Betreiben eines Fahrzeugs, wobei das Computerprogramm ausgebildet ist, das Verfahren zum Betreiben eines Fahrzeugs oder eine vorteilhafte Ausgestaltung des Verfahrens auf einer Datenverarbeitungsvorrichtung durchzuführen.

Gemäß einem fünften Aspekt zeichnet sich die Erfindung aus durch ein Computerprogrammprodukt, das ausführbaren Programmcode umfasst, wobei der Programmcode bei Ausführung durch eine Datenverarbeitungsvorrichtung das Verfahren zum Betreiben eines Fahrzeugs oder eine vorteilhafte Ausgestaltung des Verfahrens ausführt.

Das Computerprogrammprodukt umfasst insbesondere ein von der Datenverarbeitungsvorrichtung lesbares Medium, auf dem der Programmcode gespeichert ist.

Ausführungsbeispiele der Erfindung sind im Folgenden anhand der schematischen Zeichnungen näher erläutert.

Es zeigen:
- Figur 1: ein Fahrzeug mit einem Fahrzeugsteuerungssystem und
- Figur 2: ein Ablaufdiagramm zum Betreiben eines Fahrzeugs.

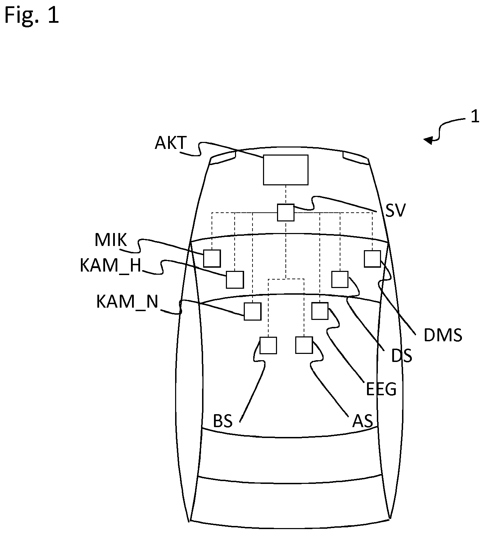

Figur 1 zeigt ein Fahrzeug 1. Das Fahrzeug 1 weist mehrere Hauptsensoreinheiten auf, wie beispielsweise einen Drucksensor DS, einen Drehmomentsensor DMS, eine Berührungssensoreinheit BS, eine Annäherungssensoreinheit AS, und eine bildverarbeitende Hauptsensoreinheit KAM_H. Das Fahrzeug 1 kann eine Untermenge der genannten Hauptsensoreinheiten oder auch zusätzliche Hauptsensoreinheiten umfassen. Des Weiteren weist das Fahrzeug 1 mehrere Nebensensoreinheiten auf, darunter eine bildverarbeitende Nebensensoreinheit KAM_N, eine audiosignalverarbeitende Einheit MIK und einen Elektroenzephalographen EEG. Das Fahrzeug 1 kann eine Untermenge der genannten Nebensensoreinheiten oder auch zusätzliche Nebensensoreinheiten umfassen.

Die Hauptsensoreinheiten und die Nebensensoreinheiten sind im Fahrzeuginnenraum angeordnet. Die Hauptsensoreinheiten und die Nebensensoreinheiten sind beispielsweise über ein Bussystem mit einer Steuerungsvorrichtung SV gekoppelt, was durch gestrichelte Linien schematisch dargestellt ist.

Das Fahrzeug 1 weist außerdem einen Aktor AKT auf. Der Aktor AKT kann beispielsweise eine Lenkung und/oder eine Bremse und/oder einen Antriebsstrang oder Teile des Antriebsstrangs umfassen. Teile des Antriebsstrangs können beispielsweise ein Getriebe und/oder eine Brennkraftmaschine und/oder eine Drosselkappenstellung sein. Der Aktor AKT ist elektrisch, beispielsweise über ein Bussystem, mit der Steuerungsvorrichtung SV gekoppelt.

Das Fahrzeug 1 weist ferner die Steuervorrichtung SV auf, die beispielsweise einen Daten- und Programmspeicher sowie eine Recheneinheit aufweist. Der Daten- und Programmspeicher und/oder die Recheneinheit kann beziehungsweise können in einer Baueinheit und/oder verteilt auf zwei oder mehrere Baueinheiten ausgebildet sein.
Die Steuervorrichtung SV ist dazu ausgebildet, über die Kopplung zu den Hauptsensoreinheiten ein Messsignal MS_H der Hauptsensoreinheit zu empfangen, das charakteristisch ist für einen Hauptfahrerwunsch. Die Steuervorrichtung SV ist auch dazu ausgebildet, über die Kopplung zu den Nebensensoreinheiten ein Messsignal MS_N der Nebensensoreinheit zu empfangen, das charakteristisch ist für einen Nebenfahrerwunsch. Die Steuervorrichtung SV ist auch dazu ausgebildet, ein Stellsignal SS an den Aktor zu senden, der in Abhängigkeit des Stellsignals SS das Fahrverhalten des Fahrzeugs beeinflusst.

Die Steuervorrichtung SV kann auch als Vorrichtung zum Betreiben eines Fahrzeugs bezeichnet werden. Die Steuervorrichtung SV kann auch als Datenverarbeitungsvorrichtung bezeichnet werden.

Der Drucksensor DS kann beispielsweise an einem Lenkrad angeordnet sein. Abhängig von einem durch eine Hand oder einen Fuß eines Fahrzeuginsassen ausgeübten Druck auf den Drucksensor DS kann auf einen Hauptfahrerwunsch geschlossen werden. Abhängig von dem ausgeübten Druck kann beispielsweise auch auf eine Intensität des Hauptfahrerwunsches geschlossen werden. Ferner kann abhängig von einer relativen Position des Fahrzeuginsassen in Bezug auf die jeweilige Position des Drucksensors DS auf den Hauptfahrerwunsch geschlossen werden. Ist der Drucksensor DS beispielsweise auf einer linken Seite relativ zu dem Fahrzeuginsassen angeordnet, kann auf einen gewünschten Abbiegevorgang des Fahrzeugs 1 nach links geschlossen werden.

Der Drehmomentsensor DMS kann beispielsweise an einer Achse des Lenkrads angeordnet sein. Abhängig von einem durch die Hand oder den Fuß des Fahrzeuginsassen ausgeübten Drehmoment auf den Drehmomentsensor DMS kann auf den Hauptfahrerwunsch geschlossen werden. Abhängig von der Intensität des ausgeübten Drehmoments oder einer Winkelgeschwindigkeit des Lenkrads kann beispielsweise auch auf die Intensität des Hauptfahrerwunsches geschlossen werden.

Die Berührungssensoreinheit BS kann beispielsweise mehrere Elemente umfassen, die als Schicht angeordnet sind. Die Berührungssensoreinheit BS kann Sensorelemente enthalten, die resistiv und/oder kapazitiv und/oder induktiv und/oder temperatursensitiv arbeiten. Die Berührungssensoreinheit BS kann beispielsweise Teil eines Touchscreens sein. Die Berührungssensoreinheit BS kann beispielsweise an der Mittelkonsole des Fahrzeugs 1 angeordnet sein. Abhängig von einer durch die Hand oder den Fuß des Fahrzeuginsassen ausgeübten Berührung der Berührungssensoreinheit BS kann auf den Hauptfahrerwunsch geschlossen werden. Ferner kann abhängig von einer relativen Position des Fahrzeuginsassen in Bezug auf die jeweilige Position der Berührungssensoreinheit BS auf den Hauptfahrerwunsch geschlossen werden. Abhängig von der Bewegung, die bei der ausgeübten Berührung der Berührungssensoreinheit BS durch den Fahrzeuginsassen ausgeführt wird, kann auf eine Berührungsgeste geschlossen werden. Die Berührungsgeste kann beispielsweise ein Wischen von rechts nach links auf der Berührungssensoreinheit BS umfassen und als gewünschter Abbiegevorgang des Fahrzeugs 1 nach links gedeutet werden.

Die Annäherungssensoreinheit AS kann beispielsweise mehrere Elemente umfassen, die als Schicht angeordnet sind. Die Annäherungssensoreinheit kann Sensorelemente enthalten, die resistiv und/oder kapazitiv und/oder induktiv und/oder temperatursensitiv arbeiten. Die Annäherungssensoreinheit AS kann beispielsweise Teil eines Touchscreens sein. Die Annäherungssensoreinheit AS kann beispielsweise an der Mittelkonsole des Fahrzeugs 1 angeordnet sein. Abhängig von einer durch die Hand oder den Fuß des Fahrzeuginsassen ausgeübten Annäherung an die Annäherungssensoreinheit AS kann auf den Hauptfahrerwunsch geschlossen werden. Ferner kann abhängig von einer relativen Position des Fahrzeuginsassen in Bezug auf die jeweilige Position der Annäherungssensoreinheit AS auf den Hauptfahrerwunsch geschlossen werden.

Die bildverarbeitende Hauptsensoreinheit KAM_H ist beispielsweise so angeordnet, dass ein Bereich eines Innenraums des Fahrzeugs 1 erfasst wird. Der Bereich des Innenraums umfasst dabei einen vorgegebenen Bewegungsspielraum des Fahrzeuginsassen. Abhängig von einer durch die Hand oder den Fuß des Fahrzeuginsassen ausgeübten Bewegung innerhalb des vorgegebenen Bewegungsspielraums, welche durch die bildverarbeitende Hauptsensoreinheit KAM_H erfasst wird, kann auf den Hauptfahrerwunsch geschlossen werden. Abhängig von der Bewegung der Hand oder des Fußes des Fahrzeuginsassen kann auf eine Geste geschlossen werden. Die Geste kann beispielsweise einen Fingerzeig nach links umfassen und als gewünschter Abbiegevorgang des Fahrzeugs 1 nach links gedeutet werden.

Die bildverarbeitende Nebensensoreinheit KAM_N ist beispielsweise so angeordnet, dass der Bereich des Innenraums des Fahrzeugs 1 erfasst wird. Abhängig von einer anderweitig als durch die Hand oder den Fuß des Fahrzeuginsassen ausgeübten Bewegung, welche durch die bildverarbeitende Nebensensoreinheit KAM_N erfasst wird, beispielsweise einer Bewegung mindestens eines Auges des Fahrzeuginsassen kann auf einen Nebenfahrerwunsch geschlossen werden. Die bildverarbeitende Nebensensoreinheit KAM_N kann dazu ausgebildet sein, eine Blickrichtung des Fahrzeuginsassen zu erfassen. Abhängig von der Blickrichtung des Fahrzeuginsassen innerhalb eines vorgegebenen Bereichs kann auf den Nebenfahrerwunsch geschlossen werden. Beispielsweise erfasst die bildverarbeitende Nebensensoreinheit KAM_N einen Blick des Fahrzeuginsassen durch eine Frontscheibe des Fahrzeugs 1. Der vorgegebene Bereich umfasst beispielsweise einen äußeren Rand der Frontscheibe. Geht die Blickrichtung des Fahrzeuginsassen beispielsweise an den linken äußeren Rand der Frontscheibe, kann auf den Nebenfahrerwunsch, nach links abzubiegen, geschlossen werden.

Die audiosignalverarbeitende Einheit MIK ist beispielsweise in einem Dachhimmel des Fahrzeugs 1 in unmittelbarer Nähe eines Kopfes des Fahrzeuginsassen angeordnet. Abhängig von einem durch den Fahrzeuginsassen geäußerten Sprachbefehl, welcher durch die audiosignalverarbeitende Einheit MIK erfasst wird, kann auf den Nebenfahrerwunsch geschlossen werden. Der Sprachbefehl kann vorgegebene Kommandos beinhalten. Beispielsweise kann das Kommando "Links abbiegen" als Nebenfahrerwunsch gedeutet werden, links abzubiegen.

Abhängig von einer elektrischen Gehirnaktivität des Fahrzeuginsassen, welche beispielsweise bei einer gedanklichen Konzentration des Fahrzeuginsassen auf den Nebenfahrerwunsch erzeugt wird, kann durch den Elektroenzephalograph (EEG) auf den Nebenfahrerwunsch geschlossen werden. Denkt der Fahrzeuginsasse beispielsweise das Kommando "Links abbiegen", kann dies als Nebenfahrerwunsch gedeutet werden, links abzubiegen.

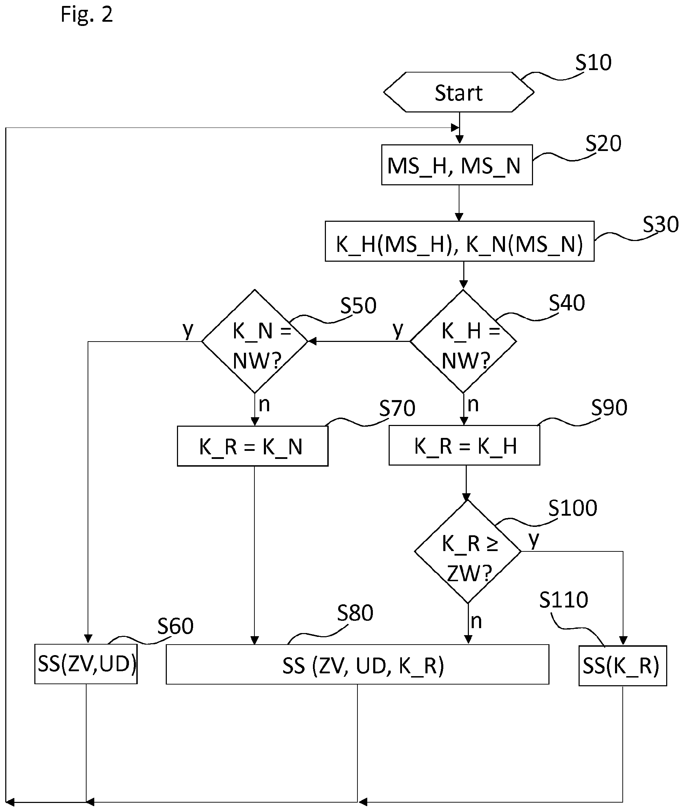

Insbesondere in dem Daten- und Programmspeicher der Steuervorrichtung SV ist ein Programm gespeichert, das im Folgenden anhand des Ablaufdiagramms der Figur 2 näher erläutert wird.

Das Programm wird in einem Schritt S10 gestartet, in dem beispielsweise Variablen initialisiert werden.

In einem Schritt S20 wird das Messsignal MS_H der mindestens einen Hauptsensoreinheit sowie das Messsignal MS_N der mindestens einen Nebensensoreinheit bereitgestellt. Das Messsignal MS_H der jeweiligen Hauptsensoreinheit ist charakteristisch für den jeweiligen Hauptfahrerwunsch des Fahrzeuginsassen. Das Messsignal MS_N der jeweiligen Nebensensoreinheit ist charakteristisch für den jeweiligen Nebenfahrerwunsch des Fahrzeuginsassen. Der jeweilige Hauptfahrerwunsch und der jeweilige Nebenfahrerwunsch können sowohl einfache bis komplexe Fahrmanöver beinhalten. Ein einfaches Fahrmanöver beinhaltet beispielsweise eine Beschleunigung des Fahrzeugs. Ein komplexes Fahrmanöver beinhaltet beispielsweise einen Spurwechsel des Fahrzeugs und/oder einen Abbiegevorgang des Fahrzeugs und/oder ein Überholmanöver des Fahrzeugs.

In einem Schritt S30 wird abhängig von dem Messsignal MS_H der Hauptsensoreinheit ein Hauptfahrerwunschkennwert K_H ermittelt und abhängig von dem Messsignal MS_N der Nebensensoreinheit ein Nebenfahrerwunschkennwert K_N ermittelt. Der Hauptfahrerwunschkennwerts K_H ist repräsentativ für den Hauptfahrerwunsch. Der Nebenfahrerwunschkennwerts K_N ist repräsentativ für den Nebenfahrerwunsch.

In einem Schritt S40 wird der Hauptfahrerwunschkennwert K_H auf Gleichheit mit einem vorgegebenen neutralen Wert NW verglichen. Der neutrale Wert NW ist hinsichtlich des Hauptfahrerwunsches dafür repräsentativ, dass der Fahrzeuginsasse vermeintlich keinen Hauptfahrerwunsch ausgedrückt hat, also der Hauptfahrerwunsch vermeintlich einen Neutralwert aufweist. Falls der Hauptfahrerwunschkennwert K_H dem neutralen Wert NW entspricht, wird das Programm in einem Schritt S50 fortgesetzt. Anderenfalls wird das Programm in einem Schritt S90 fortgesetzt.

In dem Schritt S50 wird der Nebenfahrerwunschkennwert K_N auf Gleichheit mit dem vorgegebenen neutralen Wert NW verglichen. Der neutrale Wert NW ist hinsichtlich des Nebenfahrerwunsches dafür repräsentativ, dass der Fahrzeuginsasse vermeintlich keinen Nebenfahrerwunsch ausgedrückt hat, also der Nebenfahrerwunsch vermeintlich den Neutralwert aufweist. Falls der Nebenfahrerwunschkennwert K_N dem neutralen Wert NW entspricht, wird das Programm in einem Schritt S60 fortgesetzt. Anderenfalls wird das Programm in einem Schritt S70 fortgesetzt.

In dem Schritt S60 wird das Stellsignal SS abhängig von einer Zielvorgabe ZV des Fahrzeuginsassen und abhängig von Daten bezüglich der Umgebung UD des Fahrzeugs 1 erzeugt. Weder der Hauptfahrerwunschkennwert K_H, noch der Nebenfahrerwunschkennwert K_N haben einen Einfluss auf das Erzeugen des Stellsignals SS in dem Schritt S60.

Die Zielvorgabe ZV des Fahrzeuginsassen kann bereits vor Programmstart bereitgestellt worden sein. Insbesondere kann die Zielvorgabe ZV vorab verwendet worden sein, um eine Planung einer Route durchzuführen. Die Route umfasst dabei einen bestmöglichen Weg von einer, zu einem Zeitpunkt der Planung ermittelten Fahrzeugposition zu der Zielvorgabe ZV des Fahrzeuginsassen. Abhängig von einer aktuellen Fahrzeugposition kann die gewünschte Route auch angepasst werden. Die Route sowie die Anpassung der Route wird optional signalisiert, so zum Beispiel optisch oder akustisch, beispielsweise über ein sogenanntes Head-Up Display.

Die Daten bezüglich der Umgebung UD des Fahrzeugs 1 umfassen beispielsweise die aktuelle Fahrzeugposition und/oder ein Hindernis in einer unmittelbaren Umgebung des Fahrzeugs 1 sowie auch grundsätzlich ein Hindernis im weiteren Verlauf der Route.

Das Stellsignal SS wird in dem Schritt S60 derart erzeugt, dass durch eine Beeinflussung eines Fahrverhaltens des Fahrzeugs ein Beitrag dazu geleistet wird, dass eine Wahrscheinlichkeit eines Zusammenstoßes mit dem Hindernis in der unmittelbaren Umgebung gering ist. Das Stellsignal SS wird außerdem derart erzeugt, dass durch die Beeinflussung des Fahrverhaltens des Fahrzeugs ein Beitrag dazu geleistet wird, dass Gesetze durch einen Kraftfahrzeugbetrieb nicht verletzt werden.

Der Kraftfahrzeugbetrieb, bei dem das Erzeugen des Stellsignals SS abhängig von der Zielvorgabe ZV und abhängig von den Daten bezüglich der Umgebung UD des Fahrzeugs 1 und optional ohne zusätzliche Beeinflussung durch den Fahrzeuginsassen erfolgt, kann auch als autonomer Fahrbetrieb bezeichnet werden. Somit liegt autonomer Fahrbetrieb vor, wenn der Schritt S60 durchlaufen wird.

Nach dem Schritt S60 wird das Programm gegebenenfalls nach einer vorgegebenen Wartezeit in dem Schritt S20 fortgesetzt.

In dem Schritt S70 wird ein resultierender Fahrerwunschkennwert K_R abhängig von dem Nebenfahrerwunschkennwert K_N und unabhängig von dem Hauptfahrerwunschkennwert K_H ermittelt. Insbesondere wird der Nebenfahrerwunschkennwert K_N beispielsweise dem resultierenden Fahrerwunschkennwert K_R direkt zuordnet. Das Programm wird danach in einem Schritt S80 fortgesetzt.

Alternativ oder zusätzlich kann in dem Schritt S70 im Falle von mehreren Nebensensoreinheiten ein Priorisieren des jeweiligen Nebenfahrerwunschkennwerts K_N im Rahmen des Ermittelns des resultierenden Fahrerwunschkennwerts K_R erfolgen, gegebenenfalls abhängig von einem jeweiligen Zuverlässigkeitskennwert, der repräsentativ ist für eine Zuverlässigkeit beim Ermitteln des jeweiligen Nebenfahrerwunschkennwerts K_N. Alternativ oder zusätzlich kann eine vorgegebene Gewichtung des jeweiligen Nebenfahrerwunschkennwerts K_N im Rahmen des Ermittelns des resultierenden Fahrerwunschkennwerts K_R erfolgen, gegebenenfalls abhängig von dem jeweiligen Zuverlässigkeitskennwert.

In dem Schritt S80 wird das Stellsignal SS abhängig von der Zielvorgabe ZV des Fahrzeuginsassen und abhängig von den Daten bezüglich der Umgebung UD des Fahrzeugs 1 und abhängig von dem resultierenden Fahrerwunschkennwert K_R erzeugt.

Das Stellsignal SS wird in dem Schritt S80 derart erzeugt, dass durch eine Beeinflussung eines Fahrverhaltens des Fahrzeugs ein Beitrag dazu geleistet wird, dass die Wahrscheinlichkeit des Zusammenstoßes mit dem Hindernis in der unmittelbaren Umgebung gering ist. Das Stellsignal SS wird außerdem derart erzeugt, dass durch die Beeinflussung des Fahrverhaltens des Fahrzeugs ein Beitrag dazu geleistet wird, dass Gesetze durch den Kraftfahrzeugbetrieb nicht verletzt werden. Mittels des Aktors AKT wird abhängig von dem Stellsignal SS demnach nur unter den oben genannten Bedingungen das Fahrverhalten des Fahrzeugs 1 derart beeinflusst, dass der resultierende Fahrerwunsch des Fahrzeuginsassen umgesetzt wird. Der autonome Fahrbetrieb liegt vor, wenn der Schritt S80 durchlaufen wird.

Nach dem Schritt S80 wird das Programm nach einer bestimmten Verzögerung in dem Schritt S20 fortgesetzt.

In dem Schritt S90 wird der resultierende Fahrerwunschkennwert K_R abhängig von dem Hauptfahrerwunschkennwert K_H und unabhängig von dem Nebenfahrerwunschkennwert K_N ermittelt. Insbesondere wird der Hauptfahrerwunschkennwert K_H beispielsweise dem resultierenden Fahrerwunschkennwert direkt zuordnet. So kann bei multimodalen oder gleichzeitigen Fahrereingaben immer der Hauptfahrerwunsch berücksichtigt werden, also priorisiert werden. Das Programm wird anschließend in einem Schritt S100 fortgesetzt.

In dem Schritt S100 wird der resultierende Fahrerwunschkennwert K_R auf Gleichheit mit einem vorgegebenen Zwangseingriffswert ZW und/oder auf Überschreiten des vorgegeben Zwangseingriffswerts ZW geprüft. Der Zwangseingriffswert ZW liegt vor, wenn der Fahrzeuginsasse einen Hauptfahrerwunsch besonderer Intensität ausgedrückt hat. Dies kann zum Beispiel repräsentiert sein durch eine vorgegeben schnell durch den Fahrzeuginsassen durchgeführte Lenkbewegung des Lenkrads. Liegt der Zwangseingriffswert ZW vor, so wird das Programm in einem Schritt S110 fortgesetzt. Anderenfalls wird das Programm in dem Schritt S80 fortgesetzt.

In dem Schritt S110 wird abhängig von dem resultierenden Fahrerwunschkennwert K_R das Stellsignal SS erzeugt. Das Stellsignal SS wird demnach insbesondere direkt korrespondierend zu dem resultierenden Fahrerwunsch erzeugt und ohne Berücksichtigung der Zielvorgabe ZV und der Daten bezüglich der Umgebung UD des Fahrzeugs 1. Dies ermöglicht beispielsweise bei einer Fehlfunktion bei der Verarbeitung der Daten bezüglich der Umgebung UD oder in Situationen, in denen ein Eingriff des Fahrzeuginsassen zwingend erforderlich ist, dass der Hauptfahrerwunsch zuverlässig ausgeführt wird. Nach dem Schritt S110 wird das Programm in dem Schritt S20 fortgesetzt. Optional kann dann das weitere Erzeugen des Steuersignals SS entsprechend dem Schritt S110 erfolgen, gegebenenfalls bis eine vorgegebene Bedingung erfüllt ist.

### Bezugszeichenliste

- 1: Fahrzeug
- SV: Steuervorrichtung
- AKT: Aktor
- MIK: Audiosignalverarbeitende Einheit
- KAM_H: Bildverarbeitende Hauptsensoreinheit
- KAM_N: Bildverarbeitende Nebensensoreinheit
- BS: Berührungssensoreinheit
- AS: Annäherungssensoreinheit
- EEG: Elektroenzephalograf
- DS: Drucksensor
- DMS: Drehmomentsensor

- S10 ... S110: Programmschritte
- MS_H: Messsignal der Hauptsensoreinheit
- MS_N: Messsignal der Nebensensoreinheit
- K_H: Hauptfahrerwunschkennwert
- K_N: Nebenfahrerwunschkennwert
- K_R: Resultierender Fahrerwunschkennwert
- ZW: Zwangseingriffswert
- ZV: Zielvorgabe
- UD: Daten bezüglich Umgebung
- SS: Stellsignal
- NW: Neutraler Wert

## Patentansprüche

1. Verfahren zum Betreiben eines Fahrzeugs (1) mit
- mindestens einer Hauptsensoreinheit, deren Messsignal (MS_H) charakteristisch ist für einen Hauptfahrerwunsch eines Fahrzeuginsassen bezüglich einer Beeinflussung eines Fahrverhaltens des Fahrzeugs (1), repräsentiert durch eine Bewegung einer Hand oder eines Fußes des Fahrzeuginsassen,
- mindestens einer Nebensensoreinheit, deren Messsignal (MS_N)charakteristisch ist für einen Nebenfahrerwunsch des Fahrzeuginsassen bezüglich der Beeinflussung des Fahrverhaltens des Fahrzeugs (1), repräsentiert anderweitig als durch die Bewegung der Hand oder des Fußes des Fahrzeuginsassen,
- mindestens einem Aktor (AKT), der in Abhängigkeit eines Stellsignals (SS) das.Fahrverhalten des Fahrzeugs (1) beeinflusst,
und bei dem
- abhängig von dem durch das Messsignal (MS_H) des Hauptsensors repräsentierten Hauptfahrerwunsch und abhängig von dem durch das Messsignal (MS_N) des Nebensensors repräsentierten Nebenfahrerwunsch ein resultierender Fahrerwunsch bezüglich der Beeinflussung des Fahrverhaltens des Fahrzeugs (1) ermittelt wird, **dadurch gekennzeichnet, dass** im Falle eines Neutralwerts des Hauptfahrerwunsches dem resultierenden Fahrerwunsch der Nebenfahrerwunsch zugeordnet wird und anderenfalls dem resultierenden Fahrerwunsch der Hauptfahrerwunsch zugeordnet wird und
- abhängig von dem resultierenden Fahrerwunsch das Stellsignal (SS) erzeugt wird.

2. Verfahren nach Anspruch 1, wobei die Hauptsensoreinheit als ein Drucksensor (DS) und/oder ein Drehmomentsensor (DMS) ausgebildet ist.

3. Verfahren nach einem der vorstehenden Ansprüche, wobei die Hauptsensoreinheit als Berührungssensoreinheit (BS) und/oder eine Annäherungssensoreinheit (AS) ausgebildet ist.

4. Verfahren nach einem der vorstehenden Ansprüche, wobei die Hauptsensoreinheit als eine bildverarbeitende Hauptsensoreinheit (KAM_H) ausgebildet ist.

5. Verfahren nach einem der vorstehenden Ansprüche, wobei die Nebensensoreinheit als eine bildverarbeitende Nebensensoreinheit (KAM_N) ausgebildet ist.

6. Verfahren nach Anspruch 5, wobei der Nebenfahrerwunsch repräsentiert ist durch eine Blickrichtung des Fahrzeuginsassen innerhalb eines vorgegebenen Bereichs.

7. Verfahren nach einem der vorstehenden Ansprüche, wobei die Nebensensoreinheit als eine audiosignalverarbeitende Einheit (MIK) ausgebildet ist.

8. Verfahren nach Anspruch 7, wobei der Nebenfahrerwunsch repräsentiert ist durch einen Sprachbefehl des Fahrzeuginsassen.

9. Verfahren nach einem der vorstehenden Ansprüche, wobei die Nebensensoreinheit als ein Elektroenzephalograf (EEG) ausgebildet ist.

10. Verfahren nach Anspruch 9, wobei der Nebenfahrerwunsch repräsentiert ist durch eine elektrische Gehirnaktivität des Fahrzeuginsassen.

11. Verfahren nach einem der vorstehenden Ansprüche, bei dem
- eine Zielvorgabe (ZV) des Fahrzeuginsassen bereitgestellt wird,
- Daten bezüglich einer Umgebung (UD) des Fahrzeugs (1) bereitgestellt werden,
- abhängig von der Zielvorgabe (ZV) des Fahrzeuginsassen und von den Daten bezüglich der Umgebung (UD) des Fahrzeugs (1) und des resultierenden Fahrerwunsches des Fahrzeuginsassen das Stellsignal (SS) erzeugt wird.

12. Vorrichtung (SV) zum Betreiben eines Fahrzeugs (1), die ausgebildet ist, das Verfahren nach einem der Ansprüche 1 bis 11 auszuführen.

13. Fahrzeugsteuerungssystem umfassend:
eine Vorrichtung (SV) nach Anspruch 12, die signaltechnisch gekoppelt ist mit
- der mindestens einen Hauptsensoreinheit,
- der mindestens einen Nebensensoreinheit und
- dem mindestens einen Aktor (AKT).

14. Fahrzeug umfassend ein Fahrzugsteuerungssystem nach Anspruch 13.

15. Computerprogramm zum Betreiben eines Fahrzeugs (1), wobei das Computerprogramm ausgebildet ist, ein Verfahren nach einem der Ansprüche 1 bis 11 bei seiner Ausführung auf einer Datenverarbeitungsvorrichtung durchzuführen.

16. Computerprogrammprodukt umfassend ausführbaren Programmcode, wobei der Programmcode bei Ausführung durch eine Datenverarbeitungsvorrichtung das Verfahren nach einem der Ansprüche 1 bis 11 ausführt.

## Claims

1. A method for operating a vehicle (1) with
- at least one main sensor unit, of which the measurement signal (MS_H) is characteristic of a main driver desire of a vehicle occupant with regard to an influencing of the driving behaviour of the vehicle (1), represented by a movement of a hand or foot of the vehicle occupant,
- at least one secondary sensor unit, of which the measurement signal (MS_N) is characteristic of a secondary driver desire of the vehicle occupant with regard to the influencing of the driving behaviour of the vehicle (1), represented other than by the movement of the hand or the foot of the vehicle occupant,
- at least one actuator (AKT), which influences the driving behaviour of the vehicle (1) depending on a control signal (SS),
and in which
- depending on the main driver desire represented by the measurement signal (MS_H) of the main sensor and depending on the secondary driver desire represented by the measurement signal (MS_N) of the secondary sensor, a resultant driver desire with regard to the influencing of the driving behaviour of the vehicle (1) is determined,
**characterised in that**, in the event of a neutral value of the main driver desire, the secondary driver desire is associated with the resultant driver desire, and otherwise the main driver desire is associated with the resultant driver desire, and
- the control signal (SS) is generated depending on the resultant driver desire.

2. A method according to claim 1, wherein the main sensor unit is formed as a pressure sensor (DS) and/or a torque sensor (DMS).

3. A method according to either one of the preceding claims, wherein the main sensor unit is formed as a contact sensor unit (BS) and/or a proximity sensor unit (AS).

4. A method according to any one of the preceding claims, wherein the main sensor unit is formed as an image-processing main sensor unit (KAM_H).

5. A method according to any one of the preceding claims, wherein the secondary sensor unit is formed as an image-processing secondary sensor unit (KAM_N).

6. A method according to claim 5, wherein the secondary driver desire is represented by a viewing direction of the vehicle occupant within a predefined region.

7. A method according to any one of the preceding claims, wherein the secondary sensor unit is formed as an audio signal-processing unit (MIK).

8. A method according to claim 7, wherein the secondary driver desire is represented by a voice command of the vehicle occupant.

9. A method according to any one of the preceding claims, wherein the secondary sensor unit is formed as an electro-encephalograph (EEG).

10. A method according to claim 9, wherein the secondary driver desire is represented by an electrical brain activity of the vehicle occupant.

11. A method according to any one of the preceding claims, in which
- a destination specification (ZV) of the vehicle occupant is provided,
- data relating to a surrounding area (UD) of the vehicle (1) is provided,
- the control signal (SS) is generated depending on the destination specification (ZV) of the vehicle occupant and depending on the data relating to the surrounding area (UD) of the vehicle (1) and the resultant driver desire of the vehicle occupant.

12. A device (SV) for operating a vehicle (1), which device is designed to carry out the method according to any one of claims 1 to 11.

13. A vehicle control system, comprising:
a device (SV) according to claim 12 which is coupled to
- the at least one main sensor unit,
- the at least one secondary sensor unit, and
- the at least one actuator (AKT)
for signal exchange therewith.

14. A vehicle comprising a vehicle control system according to claim 13.

15. A computer program for operating a vehicle (1), wherein the computer program is designed to carry out a method according to any one of claims 1 to 11 when said computer program is run on a data processing device.

16. A computer program product comprising an executable program code, wherein the program code executes the method according to any one of claims 1 to 11 when run by a data processing device.

## Revendications

1. Procédé de gestion d'un véhicule (1) comprenant :
- au moins une unité de capteur principale dont le signal de mesure (MS_H) est caractéristique d'un souhait de conduite principal d'un occupant du véhicule relatif à une intervention sur le comportement dynamique du véhicule (1), représenté par un déplacement d'une main ou d'un pied de l'occupant du véhicule,
- au moins une unité de capteur auxiliaire dont le signal de mesure (MS_N) est caractéristique d'un souhait de conduite auxiliaire de l'occupant du véhicule relatif à l'intervention sur le comportement dynamique du véhicule (1) représenté autrement que par le déplacement de la main ou du pied de l'occupant du véhicule,
- au moins un actionneur (AKT), qui, en fonction d'un signal de réglage (SS) intervient sur le comportement dynamique du véhicule (1), et selon lequel :
- en fonction du souhait de conduite principal représenté par le signal de mesure (MS_H) du capteur principal et en fonction du souhait de conduite auxiliaire représenté par le signal de mesure (MS_N) du capteur auxiliaire, on détermine un souhait de conducteur résultant relatif à l'intervention sur le comportement dynamique du véhicule (1),
**caractérisé en ce que**
lorsque le souhait de conduite principal, a une valeur neutre on associe au souhait de conduite résultant le souhait de conduite auxiliaire, et, sinon, on associe au souhait de conduite résultant le souhait de conduite principal, et
le signal de réglage (SS) est produit en fonction du souhait de conduite résultant.

2. Procédé conforme à la revendication 1,
selon lequel l'unité de capteur principale est réalisée sous la forme d'un capteur de pression (DS) et/ou d'un capteur de couple (DMS).

3. Procédé conforme à l'une des revendications précédentes, selon lequel l'unité de capteur principale est réalisée sous la forme d'une unité de capteur de contact (BS) et/ou d'une unité de capteur de proximité (AS).

4. Procédé conforme à l'une des revendications précédentes,
selon lequel l'unité de capteur principale est réalisée sous la forme d'une unité de capteur principal à traitement d'images (KAM_H).

5. Procédé conforme à l'une des revendications précédentes,
selon lequel l'unité de capteur auxiliaire est réalisée sous la forme d'une unité de capteur auxiliaire à traitement d'images (KAM-N).

6. Procédé conforme à la revendication 5,
selon lequel le souhait de conduite auxiliaire est représenté par la direction de visée de l'occupant du véhicule dans une zone prédéfinie.

7. Procédé conforme à l'une des revendications précédentes,
selon lequel l'unité de capteur auxiliaire est réalisée sous la forme d'une unité de traitement de signal audio (MIK).

8. Procédé conforme à la revendication 7,
selon lequel le souhait de conduite auxiliaire est représenté par un ordre vocal de l'occupant du véhicule.

9. Procédé conforme à l'une des revendications précédentes,
selon lequel l'unité de capteur auxiliaire est réalisée sous la forme d'un électroencéphalographe (EEG).

10. Procédé conforme à la revendication 9,
selon lequel le souhait de conduite auxiliaire est représenté par une activité électrique cérébrale de l'occupant du véhicule.

11. Procédé conforme à l'une des revendications précédentes,
selon lequel :
- on fournit un objectif (ZV) de l'occupant du véhicule,
- on fournit des données concernant l'environnement (UD) du véhicule (1),
- en fonction de l'objectif (ZV) de l'occupant du véhicule et des données concernant l'environnement (UD) du véhicule (1) ainsi que du souhait de conduite résultant de l'occupant du véhicule on produit le signal de réglage (SS).

12. Dispositif (SV) de gestion d'un véhicule (1) réalisé pour permettre la mise en oeuvre du procédé conforme à l'une des revendications 1 à 11.

13. Système de commande d'un véhicule comprenant :
un dispositif (SV) conforme à la revendication 12, qui est couplé par la technique des signaux avec :
- l'unité de capteur principal,
- l'unité de capteur auxiliaire, et
- l'actionneur (AKT).

14. Véhicule équipé d'un système de commande conforme à la revendication 13.

15. Programme d'ordinateur permettant de gérer un véhicule (1), ce programme d'ordinateur étant réalisé pour permettre la mise en oeuvre du procédé conforme à l'une des revendications 1 à 11 lors de son exécution sur un dispositif de traitement de données.

16. Produit-programme d'ordinateur comprenant un code de programme exécutable, ce code de programme étant exécuté lors de la mise en oeuvre du procédé conforme à l'une des revendications 1 à 11 par un dispositif de traitement de données.
